# EUROPEAN PATENT APPLICATION

(11) **EP 4 560 465 A1**
(43) Date of publication of application: **28.05.2025**
(21) Application number: 23841967.5
(22) Date of filing: 13.06.2023
(51) Int. Cl.: G06F 9/451

(54) **LYRIC-BASED INFORMATION PROMPTING METHOD AND APPARATUS, DEVICE, MEDIUM AND PRODUCT**

(30) Priority: 19.07.2022 CN 202210855357
(71) Applicant: Beijing Zitiao Network Technology Co., Ltd., Beijing 100190 (CN)
(72) Inventor: ZHOU, Yuecheng, Beijing 100028 (CN); ZHAO, Sen, Beijing 100028 (CN); WU, Weihao, Beijing 100028 (CN)
(74) Representative: Dentons UK and Middle East LLP
(86) International application number: PCT/CN2023/099994
(87) International publication number: WO 2024/016901

(57) **Abstract**

A lyric-based information prompting method and apparatus, a device, a medium, a product, and a program. The method comprises: in response to a playback request for a target song triggered by a user, determining target lyrics of the target song (301); according to a specific lyric part of the target lyrics, determining a lyric stop condition corresponding to the target lyrics (302); and, during the process of synchronously playing back the target song and the target lyrics, outputting authority acquisition information when detecting that the playback time of the target song meets the lyric stop condition (303).

## Description

### CROSS-REFERENCE TO RELATED APPLICATION

The present disclosure claims the priority to Chinese Patent Application, No. 202210855357.2, filed on July 19, 2022, entitled "METHOD AND APPARATUS FOR PROMPTING INFORMATION BASED ON LYRICS, DEVICE, MEDIUM, PRODUCT AND PROGRAM", which is incorporated herein by reference in its entirety.

### TECHNICAL FIELD

Embodiments of the present disclosure relate to the field of computer technology, and in particular to a method and an apparatus for prompting information based on lyrics, a device, a medium, a product and a program.

### BACKGROUND

With the rapid development of information technology, applications of various music types are rapidly popularized. A music-type application may playback a song and display a lyric during the process of playing the song. Generally, the playback of the song and the lyric is synchronized. Currently, the lyric is limited to the function of the sentence prompt associated with the song during the playback process of the song, resulting in less prompt content of the lyric and low utilization rate.

### SUMMARY

The embodiments of the present disclosure provide a method and an apparatus for prompting information based on lyrics, a device, a medium, a product and a program to overcome the problem that the lyric playing page is only used to playback the lyric during the process of playing the lyric, resulting in less prompting content of the lyric and low utilization rate.

In a first aspect, an embodiment of the present disclosure provides a method for prompting information based on lyrics, which includes:
in response to a playback request for a target song triggered by a user, determining a target lyric of the target song;
based on a specific lyric part of the target lyric, determining a lyric stop condition corresponding to the target lyric; and
in a process of playing the target song and the target lyric synchronously, in response to detecting that the target song reaches the lyric stop condition, outputting authority acquisition information.

In a second aspect, an embodiment of the present disclosure provides an apparatus for prompting information based on lyrics, which includes:
a request response unit, configured to, in response to a playback request for a target song triggered by a user, determine a target lyric of the target song;
a time determination unit, configured to, based on a specific lyric part of the target lyric, determine a lyric stop condition corresponding to the target lyric; and
an information prompting unit, configured to, in a process of playing the target song and the target lyric synchronously, in response to detecting that the target song reaches the lyric stop condition, output authority acquisition information.

In a third aspect, an embodiment of the present disclosure provides an electronic device, which includes: a processor and a memory;
the memory storing computer-executable instructions; and
the processor executing the computer-executable instructions stored in the memory and causing the at least one processor to perform the method for prompting information based on lyrics of the first aspect and the various possible designs of the first aspect.

In a fourth aspect, an embodiment of the present disclosure provides a computer-readable storage medium, which stores computer-executable instructions. The computer-executable instructions upon being executed by a processor, implement the method for prompting information based on lyrics of the first aspect and the various possible designs of the first aspect.

In a fifth aspect, an embodiment of the present disclosure provides a computer program product, which includes computer programs that, when executed by a processor, implement the method for prompting information based on lyrics as described above in the first aspect and the various possible designs of the first aspect.

In a sixth aspect, an embodiment of the present disclosure provides a computer program for causing a computer to perform the method for prompting information based on lyrics as described above in the first aspect and the various possible designs of the first aspect.

### BRIEF DESCRIPTION OF DRAWINGS

To clearly illustrate the technical solution of the embodiments or prior art of the present disclosure, the drawings required in the description of the embodiments or prior art will be briefly described in the following; it is obvious that the described drawings are only some embodiments of the present disclosure. For those skilled in the art, other drawings can be obtained based on these drawings without any inventive work.
Fig. 1 is a schematic diagram of a playing page according to an embodiment of the present disclosure;
Fig. 2 is a schematic diagram of another playing page according to an embodiment of the present disclosure;
Fig. 3 is a flowchart of an embodiment of a method for prompting information based on lyrics according to an embodiment of the present disclosure;
Fig. 4 is a schematic diagram of a display of lyric viewing prompt information according to an embodiment of the present disclosure;
Fig. 5 is a schematic diagram of a display of another lyric viewing prompt information according to an embodiment of the present disclosure;
Fig. 6 is a schematic diagram of a page jump display according to an embodiment of the present disclosure;
Fig. 7 is a schematic diagram of a trial prompt pop-up window according to an embodiment of the present disclosure;
Fig. 8 is a flowchart of another embodiment of a method for prompting information based on lyrics according to an embodiment of the present disclosure;
Fig. 9 is a flowchart of still another embodiment of a method for prompting information based on lyrics according to an embodiment of the present disclosure;
Fig. 10 a schematic diagram of an authority acquisition pop-up window according to an embodiment of the present disclosure;
Fig. 11 a schematic diagram of another authority acquisition pop-up window according to an embodiment of the present disclosure;
Fig. 12 is a flowchart of yet another embodiment of a method for prompting information based on lyrics according to an embodiment of the present disclosure;
Fig. 13 is a structural schematic diagram of an apparatus for prompting information based on lyrics according to an embodiment of the present disclosure; and
Fig. 14 is a schematic diagram of a hardware structure of an electronic device according to an embodiment of the present disclosure.

### DETAILED DESCRIPTION

To make the objects, technical solutions and advantages of the present disclosure clearer, the technical solutions of the embodiments of the present disclosure will be described clearly and fully understandable in conjunction with the drawings related to the embodiments of the present disclosure. Apparently, the described embodiments are just a part but not all the embodiments of the present disclosure. Based on the described embodiments herein, those skilled in the art can obtain other embodiment(s), without any inventive work, which should be within the scope of the present disclosure.

The technical solution of the present disclosure can be applied in a music playback software, the music playback software can playback a song for the user. In the process of playing the song, the authority acquisition information can be output, and by monitoring the playing of a specific lyric part, targeted prompts for a climax lyric can be realized to achieve effective utilization of the lyrics, and improve prompting efficiency.

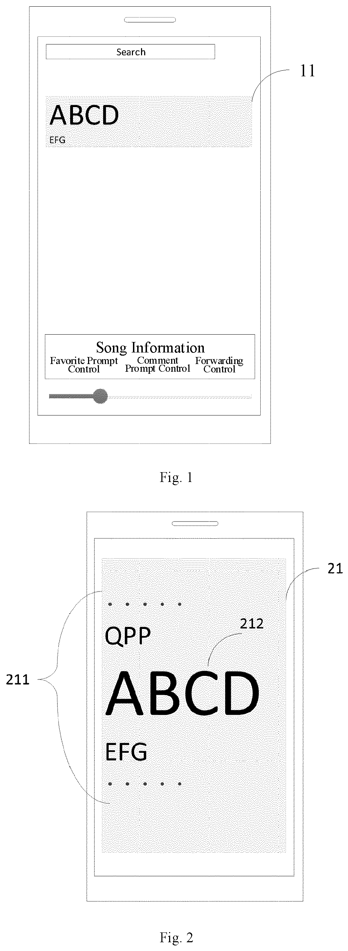

In the related art, the music playback software can playback a song for the user, and the lyric can be played along with the song. The playback mode of the lyric generally includes two types. In the first playback mode, a lyric playback control may be provided in the entire playback page of the song, and the lyric playback control can highlight the lyric that the current playback progress corresponds to each time. The highlighting of the lyric may refer to distinguishing the lyric from the unplayed or played lyric in the lyric playback region by a larger font size, highlighting, more prominent color, and other playback forms compared to the unplayed lyric, to achieve the highlighting of the lyric. The playing page of the first playing mode may specifically be as shown in Fig. 1, with reference to Fig. 1, the lyric output control 11 may play the lyric synchronized with the song each time, for example the lyric played to "ABCD" may be highlighted compared to the unpresented lyric "EFG". In addition, song information, a favorite prompt control, a comment prompt control, a forwarding control, and a playback progress control may be displayed in the playing interface. In the second playback mode, the music playback software detects the lyric viewing request triggered by the user, and may output a lyric playback page in which a plurality of lyrics can be scroll-played. The playing page of the second playing manner specifically may be as shown in Fig. 2, with reference to Fig. 2, the entire page may be the lyric playback page 21 in which a plurality of lyrics 211 can be scroll-played, the real-time lyric 212 corresponding to the playback time of the song may be distinguished from the lyric from other formats. However, in the above two playback mode of the lyric, the lyric is only used to prompt the song being played, and the information output content is relatively single, and the prompting effect is not high.

To solve the above technical problem, in the present technical solution, considering that in the playing process of the song and the lyric, the display of the lyric is targeted, particularly the user who needs to view the lyric, when viewing the lyric, other information can be displayed in association with the lyric, such as prompt information for authority maintenance, to implement prompt for content of the lyric. And the specific lyric part, such as a chorus lyric, is the lyric of the higher attention in the whole song. To improve the efficiency of the authority acquisition, it is possible to improve the efficiency of prompting for lyrics by outputting the information associated with the lyrics when playing to a specific part of the lyrics.

According to this, in the embodiment of the present disclosure, the target lyric of the target song may be determined in response to the playback request of the target lyric triggered by the user. The specific lyric part of the target lyric can be used to determine the corresponding lyric stop condition, thus, in the process of playing the target song and the target lyric synchronously, the prompt information for authority maintenance can be outputted when it is detected that the target song reaches the lyric stop condition. The prompt information of authority maintenance can manage the user's authority more effectively and trigger the user to maintain the authority. The prompt efficiency of the lyric and the processing efficiency of authority maintenance can be improved by outputting the authority acquisition information in the lyric stop condition corresponding to the specific lyric part, the content prompt information of the lyric is effectively increased, and the lyric processing efficiency is improved.

The technical solutions of the present disclosure and how the technical solutions of the present disclosure solve the above technical problems will be explained in detail below in specific embodiments. Several of the following specific embodiments may be combined with each other, and the same or similar concepts or processes may not be repeated in some embodiments. A detailed description will be made below on embodiments of the present disclosure in conjunction with the drawings.

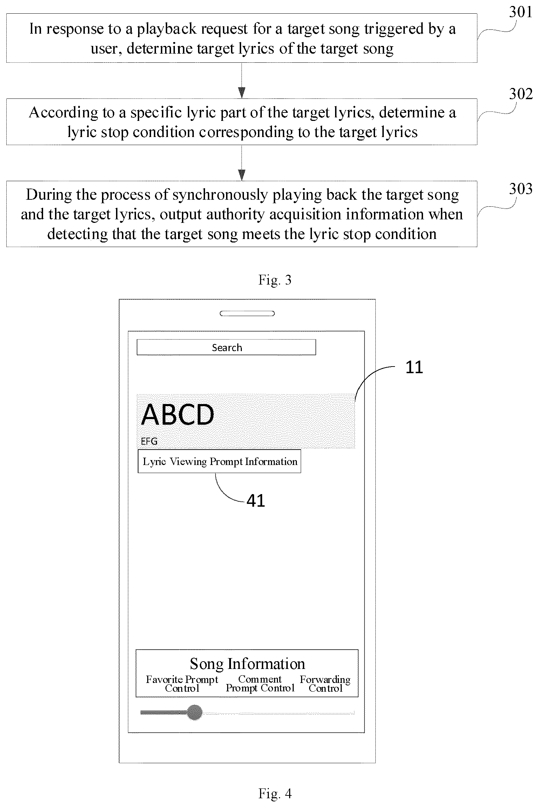

Fig. 3 shows a flowchart of an embodiment of a method for prompting information based on lyrics according to an embodiment of the present disclosure, which may be configured as an apparatus for prompting information based on lyrics, which may be disposed in an electronic device. The method for prompting information based on lyrics may include the following several steps:
301: in response to a playback request for a target song triggered by a user, determining a target lyric of the target song.

Alternatively, a music playback software may be installed in the electronic device, and the music playback software can playback a song. The music playback software in the electronic device may detect a playback request triggered by a user for a target song.

The target lyric may include: a lyric file. The lyric file may be in LRC (lyric) format. The song may be associated with lyrics to quickly obtain the target lyric of the target song.

302: based on a specific lyric part of the target lyric, determining a lyric stop condition corresponding to the target lyric.

Optionally, the lyric stop condition may include that the playback time of the target song reaches a time at which the playback of the target lyric stops. The playback of the target lyric may be stopped when the lyric stop condition is reached. Assuming that the lyric stop condition is the playback time corresponding to the specific lyric part of the target lyric, the playback of the specific lyric part may be stopped when the lyric stop condition is reached.

The playback time may include how long the song has been played. When the target song starts playing, the playback time is accumulated from zero.

Optionally, the lyric stop condition may include that the target song is played to the specific lyric part. The real-time playback of the target lyric may be detected, and if it is detected that the specific lyric part starts to be played, it is determined that the lyric stop condition is reached.

303: in a process of playing the target song and the target lyric synchronously, in response to detecting that the target song reaches the lyric stop condition, outputting authority acquisition information.

Optionally, the authority acquisition information is output at a target position of an output page of the target lyric.

The authority acquisition information may be used to prompt the user to acquire the lyric viewing authority.

The target song and the target lyric may be played synchronously. The playback progress of the target song can be detected in real time, the playback progress is compared with the lyric stop condition, and if the playback progress matches the lyric stop condition, it is determined that the target song reaches the lyric stop condition. The playback progress may include at least one of a playback time and a playback content.

In the embodiment of the present disclosure, the target lyric of the target song may be determined in response to the playback request of the target lyric triggered by the user. The specific lyric part of the target lyric can be used to determine the corresponding lyric stop condition, thus, in the process of playing the target song and the target lyric synchronously, the prompt information for authority maintenance can be outputted when it is detected that the target song reaches the lyric stop condition. The prompt information of authority maintenance can manage the user's authority more effectively and trigger the user to maintain the authority. The prompt efficiency of the lyric and the processing efficiency of authority maintenance can be improved by outputting the authority acquisition information in the lyric stop condition corresponding to the specific lyric part, the content prompt information of the lyric is effectively increased, and the lyric processing efficiency is improved.

As one embodiment, in response to detecting that the target song reaches the lyric stop condition, outputting authority acquisition information, includes:
in response to detecting that the target song reaches the lyric stop condition, stopping playing the target lyric; and
outputting the authority acquisition information.

Optionally, stopping playing the target lyric may include: if the user is of a non-member type, stopping playing the target lyric and outputting the authority acquisition information.

Alternatively, when the playback of the target lyric is stopped, the target song may continue to play or stop playing. If the target song continues to play, complete playback of the song can be achieved. If the target song stops playing, partial playback of the song may be achieved.

In the embodiment, stopping the playback of the target lyric and outputting the authority acquisition information allows the user to obtain the lyric viewing authority in time, and improves the conversion efficiency from no authority to authority.

In a possible design, outputting the authority acquisition information includes:
displaying lyric viewing prompt information in association with an output region of the target lyric; and
detecting a triggering operation performed by the user for the lyric viewing prompt information, and displaying the authority acquisition information.

Optionally, the lyric viewing prompt information may prompt the user to view all the lyrics. The lyric viewing prompt information may be, for example, text information of "View all lyrics". The lyric viewing prompt information may be output in the form of a text box, a control, or the like. Displaying the authority acquisition information specifically may include jumping to a display page of the authority prompt information, which may include a web page or a pop-up window, for example.

The triggering operation may include a click operation, a swipe operation, or the like type of operation, and the present disclosure does not limit the type of triggering operation.

Optionally, when the lyric viewing prompt information is outputted in the output page of the target lyric, the lyric viewing text box may be outputted in association with the corresponding lyric playing area. For example, a lyric viewing text box may be displayed below the lyric playback area.

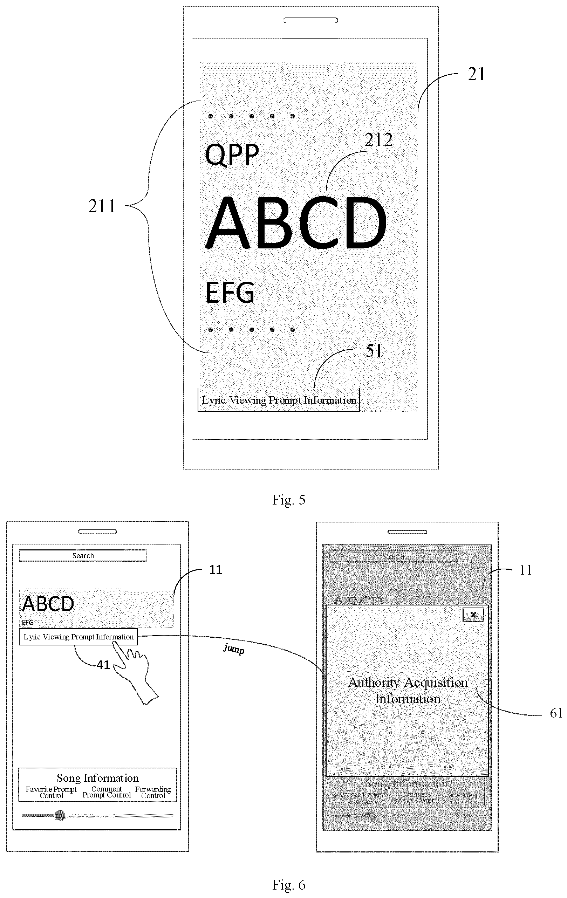

Referring to Fig. 4, for the overall playback situation shown in Fig. 1, lyric viewing prompt information 41 may be displayed below the lyric output control 11. Referring to FIG. 5, for the situation where all the lyrics shown in FIG. 1 are played, lyric viewing prompt information may be displayed at the bottom of the page.

In a possible design, as shown in Fig. 6, assuming that the lyric playback page used by the user is shown in Fig. 4, detecting a confirmation operation triggered by the user for the lyric viewing prompt information 41, such as a click operation, may trigger displaying the authority acquisition information. The authority acquisition information 61 is output and displayed in the form of a pop-up window.

In this embodiment, the lyric viewing prompt information can be displayed in association with the output region of the target lyric first, through which direct prompting of the lyrics viewing is achieved. If it is detected that the user triggers the lyric viewing prompt information, the authority acquisition information can be displayed, and the authority acquisition information can effectively and directly prompt for the acquisition of authority, improving the prompt efficiency.

In a possible design, outputting the authority acquisition information may include:
based on authority trial information and the authority acquisition information, determining a trial prompt pop-up window; and
outputting the trial prompt pop-up window to display the authority trial information and the authority acquisition information.

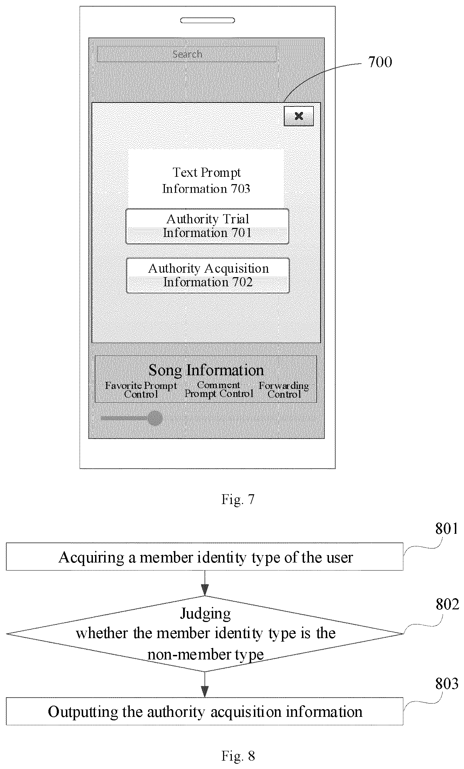

For ease of understanding, as shown in Fig. 7, when the authority acquisition information is output, the authority trial information may be output for the user at the same time. Referring to Fig. 7, specifically, authority trial information 701 and authority acquisition information 702 may be displayed in a trial prompt pop-up window 700, and in addition, text prompt information 703 for member trial may be displayed in association with the authority trial information 701, and the text prompt information 703 may be output in the form of a text box, for example.

The trial prompt pop-up window may refer to a pop-up window for outputting trial prompt information. The trial prompt pop-up window may be displayed at the upper level of the lyric playback page. The trial prompt pop-up window may include the authority trial information and the authority acquisition information, and outputting the trial prompt pop-up window means outputting the authority trial information and the authority acquisition information.

The authority trial information may prompt for the content of the initiating trial member, for example, a trial prompt control with the control name: try now. The trial prompt information may further include a trial duration. The trial duration may be set according to actual trial requirements, for example, it may be set to 3 days or 7 days. The specific time of the trial duration is not limited in detail in this embodiment.

In the present embodiment, the authority trial information and the authority acquisition information may be displayed in the form of a pop-up window, it is possible to realize synchronized prompting of the authority trial information and the authority acquisition information, expand the prompting content, and improve prompting efficiency and effectiveness. In addition, the user can be attracted to a temporary member by displaying the authority trial information, and the conversion rate of the member can be improved.

In practice, different trial durations may be set to improve the authority conversion rate. As an example, displaying the authority trial information may include:
displaying first trial information corresponding to a first trial duration or second trial information corresponding to a second trial duration, the first trial duration being greater than the second trial information.

To manage trials for different types of users to improve trial efficiency, the trial duration may be determined based on the number of trials of the user. As a possible implementation, displaying the first trial information corresponding to the first trial duration or the second trial information corresponding to the second trial duration may include:
determining a number of trials of the user;
if the number of trials indicates a first trial, displaying first trial information corresponding to the first trial duration; and
if the number of trials is less than a trial threshold, displaying second trial information corresponding to the second trial duration, the second duration being less than the first duration.

Optionally, if the user has a high number of trials, the user may no longer be provided with a trial, and therefore, displaying the authority acquisition information may include:
if the number of trials is greater than or equal to the trial threshold, outputting the authority acquisition information.

The use of the number of trials to constrain the duration of the trial can improve the effectiveness.

In some embodiments, after outputting the authority acquisition information, the method further includes:
detecting a click operation triggered by the user for the authority acquisition information, and generating an authority acquisition order; and
detecting an order processing operation performed by the user for the authority acquisition order, and displaying the specific lyric part of the target song.

Optionally, after detecting the order processing operation performed by the user for the authority acquisition order, the method may further include: updating the member identity type of the user to be a member type, controlling the user to acquire the lyric viewing authority and displaying the specific lyric part of the target song.

In this embodiment, the order processing function of the authority can be performed for the user on the basis of outputting the authority acquisition information, and the procedural processing of the prompting and the authority acquisition can be realized, and the prompting efficiency can be improved.

In providing the authority acquisition information for the user, to achieve accurate prompting, user's authority to use the information needs to be considered. Therefore, as shown in Fig. 8, a method for prompting information based on lyrics is provided by an embodiment of the present disclosure, which is different from the embodiment shown in Fig. 3 in further including:
801: acquiring a member identity type of the user, the member identity type including a non-member type, a member type or a trial member type.

Optionally, the non-member type may include that the user does not have membership authority, for example, does not have authority to view full lyrics. The member identity type may include that the user has member authority, such as an authority to view all lyrics, playback entire songs, or the like. The trial member type may refer to a member authority having a trial duration, where the user has the member authority when the trial duration is not exceeded, and where the user no longer has the member authority when the trial duration is reached or exceeded.

Outputting the authority acquisition information, specifically may include:
802: judging whether the member identity type is the non-member type, and if so, execute 803.

Alternatively, different member identity types may be recorded using different identifiers. The member identity type of the user may be determined by taking the value of the member identifier parameter of the user.

803: outputting the authority acquisition information.

In this embodiment, the user's member identity type is detected to output the authority acquisition information for a user of a non-member type, thereby realizing targeted authority acquisition prompting and improving prompting efficiency. Ineffective prompting due to authority acquisition information for the user of the member type or the trial member type can be avoided.

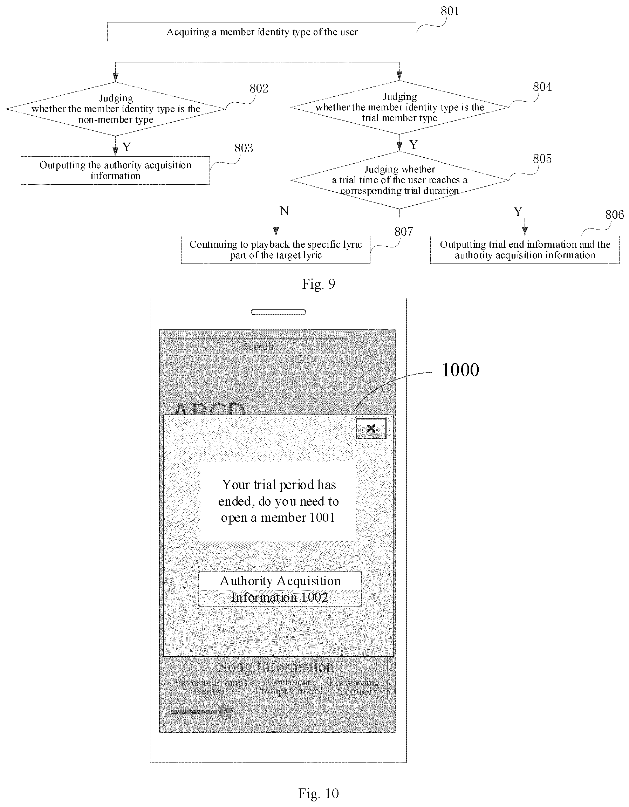

Of course, if the member identity type of the user is the trial member type, it may be determined whether to output the authority acquisition information for the user based on the trial member type. Fig. 9 shows a method for prompting information based on lyrics provided by an embodiment of the present disclosure, the method differs from the embodiment shown in Fig. 8 in that, after acquiring the member identity type of the user, the method may further include:
804: judging whether the member identity type is the trial member type, and if so, executing step 805.
805: judging whether a trial time of the user reaches a corresponding trial duration; if yes, executing 806, if no, executing 807.
806: outputting trial end information and the authority acquisition information.
807: continuing to playback the specific lyric part of the target lyric.

Alternatively, when it is judged that the member identity type is not a non-member type in step 802, or when it is judged that the member identity type is not a trial member type in step 804, it may be judged whether the member identity type is a member type, and if so, step 807 may be performed to continue to playback the specific lyric part of the target lyric.

Alternatively, the user's trial time may be detected in real time, and the user's trial time may be accumulated from the start of the trial by the user. The trial time may be a length of time from the start of the trial to the current moment.

Outputting the trial end information and the authority acquisition information may include at least one output scenario.

First output scenario: detecting that music playback software is in a foreground use state, for a real-time page or use page of the music playback software, if it is detected that a user switches a target song or enters a new song list or the like, outputting the trial end information and the authority acquisition information.

Second output scenario: detecting that the music playback software is in the background state, and if it is detected that the user switches to the foreground state again, displaying the trial end information and the authority acquisition information in the first page played by the music playback software.

Third output scenario: detecting that the music playback software is in a closed state, and if it is detected that the user starts the music playback software again, outputting the trial end information and the authority acquisition information on the first page of the music playback software.

In the present embodiment, when the member identity type of the user is the trial member type, the trial time of the user can be monitored, so that when the trial time reaches the trial duration, the prompt information of trial end and the authority acquisition can be outputted, so that the double prompt of trial end and authority acquisition can be realized, and the prompt efficiency of the information can be improved, and the prompt of the user for the authority acquisition information can effectively prompt the user to acquire the member identity, so that the relevant authority can be obtained, and the member conversion efficiency can be improved.

As an example, in step 806, outputting the trial end information and the authority acquisition information, includes:
determining an authority acquisition pop-up window based on the trial end information and the authority acquisition information, the authority acquisition pop-up window including an authority acquisition control; and
outputting the authority acquisition pop-up window.

Optionally, an authority acquisition pop-up window is used to prompt the user to acquire member authority. When the authority acquisition pop-up window is output, the trial end information and the authority acquisition information in the authority acquisition pop-up window are completed.

The authority acquisition pop-up window may be generated based on the trial end information and the authority acquisition information. The authority acquisition pop-up window may be generated in real time or in advance, and when the trial end information and the authority acquisition information need to be output, the authority acquisition pop-up window may output the trial end information and the authority acquisition information.

For ease of understanding, trial end information 1001 and authority acquisition information 1002 may be included in the authority acquisition pop-up window 1000 illustrated with reference to Fig. 10. The trial end information 1001 may include, for example, a trial end prompt text box 1001 in which text information of "Your trial duration has ended, do you need to open a member" may be output. The authority acquisition information 1002 may be a confirmation control, and when the user triggers the authority acquisition information 1002,
the authority acquisition order may be generated, and the user may be prompted to process the order and complete the authority acquisition.

In this embodiment, through the way of the authority acquisition pop-up window, the user can be prompted for the end of trial use and the authority acquisition in time, and the prompt efficiency can be improved.

As another example, if it is determined that the member identity type is a non-member type, outputting the authority acquisition information may include:
if it is determined that the member identity type is the non-member type and the user has ended a trial, determining an authority acquisition pop-up window based on the authority acquisition information in combination with member benefits information; and
outputting the authority acquisition pop-up window.

The authority acquisition pop-up window is used to process the lyric viewing authority of the user.

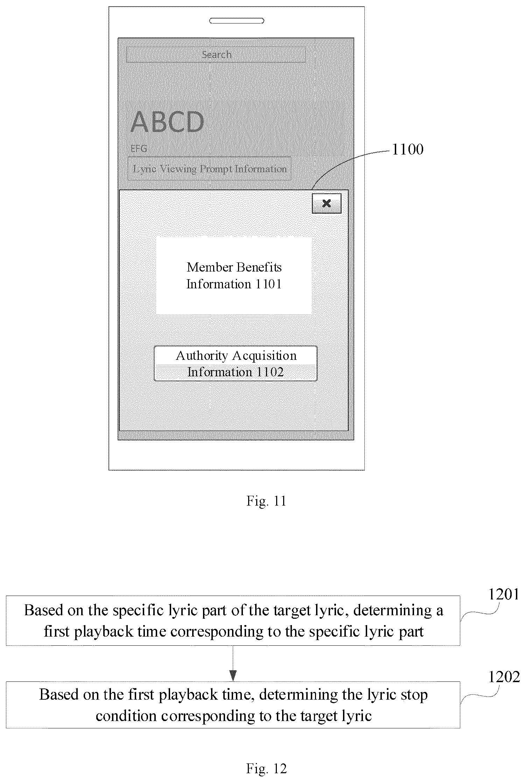

For ease of understanding, referring to the authority acquisition pop-up window 1100 shown in Fig. 11, the authority acquisition pop-up window may include member benefits information 1101 and authority acquisition information 1102. The member benefits information 1101 may be output in the form of a text box or the like, and of course the member benefits information may further include a control, a dialog box and other content to enrich the display effect of the member benefits information. The authority acquisition information 1102 may be a confirmation control, and when the user triggers the authority acquisition information 1102, the authority acquisition order may be generated, and the user may be prompted to process the order and complete the authority acquisition.

The authority acquisition pop-up window may be generated based on the member benefits information and the authority acquisition information. The authority acquisition pop-up window may be generated in real time or in advance, and when it is necessary to output the member benefits information and the authority acquisition information, it is enough to output the authority acquisition pop-up window for the member benefits information and the authority acquisition information.

In this embodiment, when the user is a non-member type and the trial is completed, the authority acquisition pop-up window corresponding to the authority acquisition information and the member authority information may be based on the authority acquisition pop-up window, and the authority acquisition pop-up window may enable direct prompting of the authority acquisition information and the member authority information to improve prompting efficiency.

In practical applications, the occurrence time of the specific lyric part is generally relatively in the middle and late stages of the playback time of a song. To achieve accurate prompting, Fig. 12 shows a flowchart of an embodiment of a method for prompting information based on lyrics provided by an embodiment of the present disclosure, the method differs from the embodiment illustrated in Fig. 3 in that, according to the specific lyric part of the target lyric, determining the lyric stop condition corresponding to the target lyric, may include:
1201: based on the specific lyric part of the target lyric, determining a first playback time corresponding to the specific lyric part.
1202: based on the first playback time, determining the lyric stop condition corresponding to the target lyric.

The first playback time may be a time label associated with a specific lyric part. The specific lyric part may include a chorus lyric, and specifically may include any line of lyric in a chorus paragraph. Preferentially, the specific lyric part may refer to a first line of lyric of the chorus paragraph.

In this embodiment, the first playback time corresponding to the specific lyric part may be utilized to determine the playback stop time corresponding to the target lyric part, so that the lyric stop condition may be associated with the first playback time to stop the playback based on the association of the specific lyric part, and the effectiveness of stopping the playback of the lyric part is improved.

Alternatively, the first playback time of the specific lyric part may be directly taken as the lyric stop condition. Therefore, based on the first playback time, determining the lyric stop condition corresponding to the target lyric may include: taking the first playback time as the lyric stop condition corresponding to the target lyric.

However, if the specific lyric part appears too early or too late, directly using the first playback time as the lyric stop condition may cause the lyric to be not outputted or the lyric to be outputted too much, resulting in inefficient prompting of the lyric playback. Therefore, in some embodiments, based on the first playback time, determining the lyric stop condition corresponding to the target lyric includes:
if it is determined that the first playback time is less than a first time threshold or greater than a second time threshold, determining that a playback time of the target song reaches a preset playback time as the lyric stop condition corresponding to the target lyric; and
if it is determined that the first playback time is greater than or equal to the first time threshold and less than or equal to the second time threshold, determining that the playback time of the target song reaches the first playback time as the lyric stop condition corresponding to the target lyric.

The first time threshold is less than the second time threshold.

The first playback time may be a playback moment of the specific lyric part. When the first playback time is located between the first time threshold and the second time threshold, the first playback time may be determined as the lyric stop condition.

Optionally, the first time threshold is sufficiently small and the second time threshold is sufficiently large relative to the total duration of the song. For example, the first time threshold is 0.5 seconds and the second time threshold is 300 seconds.

In the present embodiment, the first time threshold and the second time threshold are used to restrict the first playback time corresponding to the specific lyric part, to avoid inefficient playing of the lyric due to the occurrence of the first playback time too early in the target song or over playing of the lyric due to the occurrence of the first playback time too late in the target song, to achieve precise stop of the lyric, and to improve the effect of stopping the playback of the lyric.

To obtain the accurate first playback time, as an embodiment, based on the specific lyric part of the target lyric, determining the first playback time corresponding to the specific lyric part includes:
determining at least one lyric sentence corresponding to the target lyric and each time label respectively associated with the at least one lyric sentence;
identifying a target lyric sentence corresponding to a specific lyric part from the at least one lyric sentence; and
based on a time label associated with the target lyric sentence, determining the first playback time corresponding to the specific lyric part.

Alternatively, the specific lyric part may include a chorus lyric. The chorus is generally a part of the song that overlaps more often and has a more prominent timbre or pitch, so the characteristics of the chorus can be extracted and the characteristics of the chorus can be used to identify a target lyric sentence corresponding to the song lyric from the at least one lyric sentence. For example, the target lyric sentence may be obtained by identifying a lyric sentence overlapping two or more times in a short time from the at least one lyric sentence.

In this embodiment, the target lyric sentence corresponding to the specific lyric part may be determined from at least one lyric sentence corresponding to the target lyric sentence to obtain the time label associated with the target lyric sentence as the first playback time. With the recognition of the specific lyric part, the recognition efficiency and accuracy of the specific lyric part can be improved.

As an alternative implementation, determining at least one lyric sentence corresponding to the target lyric and each time label respectively associated with the at least one lyric sentence, includes:
based on a lyric file of the target lyric, in combination with a lyric processing model, determining a lyric sentence list corresponding to the lyric file, wherein the lyric sentence list includes: the at least one lyric sentence and each sentence output information respectively associated with the at least one lyric sentence, the sentence output information including the time label of the lyric sentence; and
reading the at least one lyric sentence and each time label respectively associated with the at least one lyric sentence from the lyric sentence list.

In this embodiment, the lyric file of the target lyric can be converted into a lyric sentence list using the lyric processing model, and the obtaining of the at least one lyric sentence and each time label respectively associated with the at least one lyric sentence is completed through the at least one lyric sentence and the sentence output information associated with each lyric sentence in the lyric sentence list. Efficient and highly accurate acquisition of at least one lyric sentence and each time label respectively associated with the at least one lyric sentence is achieved.

As an embodiment, the specific lyric part may be determined by the following determination modes:
The first determination mode: based on a preset lyric playback ratio, determining the specific lyric part of the target lyric.

Alternatively, the lyric playback ratio may be obtained according to the settings made by the operation and maintenance personnel, and the lyric playback ratio of different songs may be the same or different, and specifically may be set according to the usage requirements. Of course, in a possible design, it is also possible to set the lyric playback ratio of some songs to be the same.

Based on the preset lyric playback ratio, determining the specific lyric part of the target lyric may include: determining a total number of lyrics of the target lyric; calculating a product of the lyric playback ratio and the total number of lyrics to obtain a key lyric value; determining, from the target lyric, a key lyric node corresponding to the key lyric value; and determining the specific lyric part based on the key lyric node. For example, starting from a key lyric node, N characters located after the key lyric node are determined to be the specific lyric part. N is a positive integer greater than 1.

The second determination mode: determining that a chorus lyric in the target lyric is the specific lyric part.

Optionally, the chorus lyric in the target lyric may be identified, and the chorus lyric may be a part of the target lyric that is repeated a high number of times.

The third determination mode: based on a preset song keyword, determining a serum lyric part of the target lyric to be the specific lyric part.

Alternatively, the song keyword may include an entity word in the target lyric, and the entity word in the target lyric may be identified as the lyric keyword, e.g., the first entity word may be used as the song keyword. Of course, the song keyword may also be specified by the operation and maintenance personnel, for example, the target lyric may be output by the operation and maintenance personnel, and the song keyword selected by the operation and maintenance personnel for the target lyric may be detected.

In the present embodiment, the specific lyric part is determined by setting the lyric playback ratio, the chorus lyric or setting the song keyword, the specific lyric part is determined from various angles of implementation, multi-angle acquisition of the specific lyric part is implemented, the acquisition scene thereof is expanded, and the usability rate is improved.

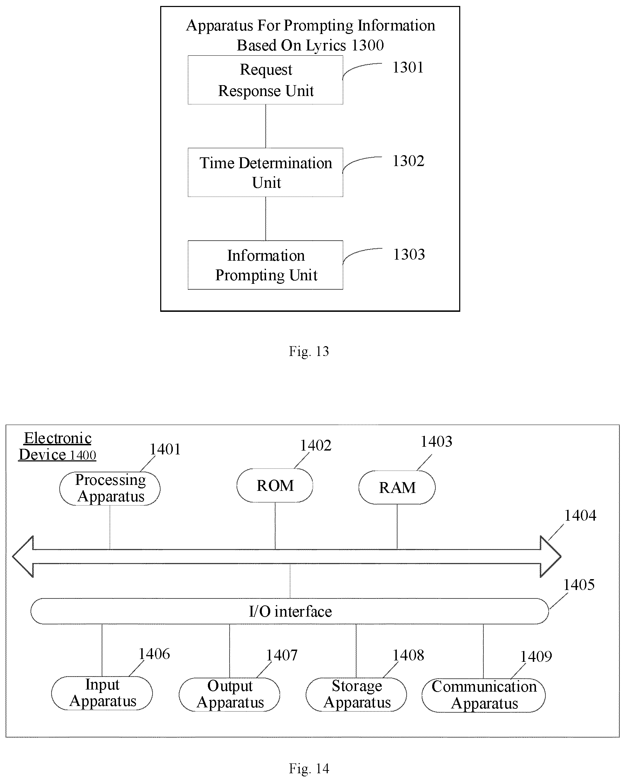

Fig. 13 is a structural schematic diagram of an apparatus for prompting information based on lyrics according to an embodiment of the present disclosure, the apparatus for prompting information based on lyrics 1300 may include:
a request response unit 1301 configured to, in response to a playback request for a target song triggered by a user, determine a target lyric of the target song;
a time determination unit 1302 configured to, based on a specific lyric part of the target lyric, determine a lyric stop condition corresponding to the target lyric; and
an information prompting unit 1303 configured to, in a process of playing the target song and the target lyric synchronously, in response to detecting that the target song reaches the lyric stop condition, output authority acquisition information.

As an example, the information prompting unit may include:
a playback stop module configured to, in response to detecting that the target song reaches the lyric stop condition, stop playing the target lyric; and
a first output module configured to output the authority acquisition information.

As another example, the information prompting unit may include:
a prompt viewing module, configured to display lyric viewing prompt information in association with an output region of the target lyric; and
a second output module, configured to detect a triggering operation performed by the user for the lyric viewing prompt information, and display the authority acquisition information.

As another example, the information prompting unit may include:
a first determination unit configured to, based on authority trial information and the authority acquisition information, determine a trial prompt pop-up window; and
a third output module, configured to output the trial prompt pop-up window to display the authority trial information and the authority acquisition information.

In some embodiments, the apparatus further includes:
an order generating unit, configured to detect a click operation triggered by the user for the authority acquisition information, and generate an authority acquisition order; and
an order processing unit, configured to detect an order processing operation performed by the user for the authority acquisition order, and display the specific lyric part of the target song.

As another embodiment, the apparatus further includes:
an identity detection unit, configured to acquire a member identity type of the user, the member identity type including a non-member type, a member type or a trial member type.

The information prompting unit may include:
a fourth output module configured to, in response to determining that the member identity type is the non-member type, output the authority acquisition information.

In some embodiments, the information prompting unit may further include:
a trial judgment module configured to, in response to determining that the member identity type is the trial member type, judge whether a trial time of the user reaches a corresponding trial duration; and
a fifth output module configured to, if yes, output trial end information and the authority acquisition information; and
a playback continuation module configured to, if no, continue playing the specific lyric part in the target lyric.

In a possible design, the fifth output module includes:
a first determination submodule, configured to determine an authority acquisition pop-up window based on the trial end information and the authority acquisition information; and
a first output submodule, configured to output the authority acquisition pop-up window.

In some embodiments, the fourth output module may include:
a second determination submodule configured to, in response to determining that the member identity type is the non-member type and the user has ended a trial, determine an authority acquisition pop-up window based on the authority acquisition information in combination with member benefits information; and
a second output submodule, configured to output the authority acquisition pop-up window.

As another embodiment, the time determination unit includes:
a first determination module configured to, based on the specific lyric part of the target lyric, determine a first playback time corresponding to the specific lyric part; and
a second determination module configured to, based on the first playback time, determine the lyric stop condition corresponding to the target lyric.

In some embodiments, the second determination module may include:
a third determination submodule configured to, in response to determining that the first playback time is less than a first time threshold or greater than a second time threshold, determine that a playback time of the target song reaches a preset playback time as the lyric stop condition corresponding to the target lyric; and
a fourth determination submodule configured to, in response to determining that the first playback time is greater than or equal to the first time threshold and less than or equal to the second time threshold, determine that the playback time of the target song reaches the first playback time as the lyric stop condition corresponding to the target lyric.

In some embodiments, the first determination module includes:
a fifth determination submodule configured to determine at least one lyric sentence corresponding to the target lyric and each time label respectively associated with the at least one lyric sentence;
a target recognition submodule configured to identify a target lyric sentence corresponding to a specific lyric part from the at least one lyric sentence; and
a sixth determination submodule configured to, based on a time label associated with the target lyric sentence, determine the first playback time corresponding to the specific lyric part.

In a possible design, the fifth determination submodule specifically may be configured to:
based on a lyric file of the target lyric, in combination with a lyric processing model, determine a lyric sentence list corresponding to the lyric file, where the lyric sentence list includes: the at least one lyric sentence and each sentence output information respectively associated with the at least one lyric sentence, the sentence output information including a time label of the lyric sentence; and
read the at least one lyric sentence and each time label respectively associated with the at least one lyric sentence from the lyric sentence list.

In some embodiments, the apparatus further includes:
a second determination unit configured to, based on a preset lyric playback ratio, determine the specific lyric part of the target lyric;
or, a third determination unit, configured to determine that a chorus lyric of the target lyric is the specific lyric part;
or, a fourth determination unit configured to, based on a preset song keyword, determine a serum lyric part of the target lyric to be the specific lyric part.

The apparatus provided by the present embodiment, which can be used to perform the technical solutions of the above method embodiments, its implementation principle and technical effect are similar, and the present embodiment will not be repeated here.

To implement the above embodiments, an embodiment of the present disclosure further provides an electronic device.

Referring to Fig. 14, which shows a structural schematic diagram suitable for achieving the electronic device 1400 in the embodiment of the present disclosure. The electronic device 1400 may be a terminal device or a server. The terminal device may include but not be limited to a mobile terminal such as a mobile phone, a notebook computer, a digital broadcasting receiver, a personal digital assistant (PDA), a portable android device (PAD), a portable multimedia player (PMP), a vehicle terminal (such as a vehicle navigation terminal), and a fixed terminal such as a digital television (TV) and a desktop computer. The electronic device shown in Fig. 14 is only an example and should not impose any limitations on the functions and use scopes of the embodiments of the present disclosure.

As shown in Fig. 14, the electronic device 1400 may include a processing apparatus (such as a central processing unit, and a graphics processor) 1401, it may execute a plurality appropriate actions and processes according to a program stored in a read-only memory (ROM) 1402 or a program loaded from a storage apparatus 1408 to a random-access memory (RAM) 1403. In RAM 1403, a plurality of programs and data required for operations of the electronic device 1400 are also stored. The processing apparatus 1401, ROM 1402, and RAM 1403 are connected to each other by a bus 1404. An input/output (I/O) interface 1405 is also connected to the bus 1404.

Generally, the following apparatuses may be connected to the I/O interface 1405: an input apparatus 1406 such as a touch screen, a touchpad, a keyboard, a mouse, a camera, a microphone, an accelerometer, and a gyroscope; an output apparatus 1407 such as a liquid crystal display (LCD), a loudspeaker, and a vibrator; a storage apparatus 1408 such as a magnetic tape, and a hard disk drive; and a communication apparatus 1409. The communication apparatus 1409 may allow the electronic device 1400 to wireless-communicate or wire-communicate with other devices to exchange data. Although Fig. 14 shows the electronic device 1400 with a plurality of apparatuses, it is not required to implement or possess all the apparatuses shown. Alternatively, it may implement or possess the more or less apparatuses.

In particular, according to an embodiment of the present disclosure, the process described above with reference to the flowchart may be achieved as a computer software program. For example, an embodiment of the present disclosure includes a computer program product, it includes a computer program carried on a computer-readable medium, and the computer program includes program codes for executing the method shown in the flowchart. In such an embodiment, the computer program may be downloaded and installed from the network by the communication apparatus 1409, or installed from the storage apparatus 1408, or installed from ROM 1402. When the computer program is executed by the processing apparatus 1401, the above functions defined in the method in the embodiments of the present disclosure are executed.

It should be noted that the above computer-readable medium in the present disclosure may be a computer-readable signal medium, a computer-readable storage medium, or any combinations of the two. The computer-readable storage medium may be, for example, but not limited to, a system, an apparatus or a device of electricity, magnetism, light, electromagnetism, infrared, or semiconductor, or any combinations of the above. More examples of the computer-readable storage medium may include but not be limited to: an electric connector with one or more wires, a portable computer magnetic disk, a hard disk drive, a RAM, a ROM, an erasable programmable read-only memory (EPROM or flash memory), an optical fiber, a compact disk read-only memory (CD-ROM), an optical storage device, a magnetic storage device or any suitable combinations of the above. In the present disclosure, the computer-readable storage medium may be any visible medium that contains or stores a program, and the program may be used by an instruction executive system, apparatus or device or used in combination with it. In the present disclosure, the computer-readable signal medium may include a data signal propagated in a baseband or as a part of a carrier wave, it carries the computer-readable program code. The data signal propagated in this way may adopt a plurality of forms, including but not limited to an electromagnetic signal, an optical signal, or any suitable combinations of the above. The computer-readable signal medium may also be any computer-readable medium other than the computer-readable storage medium, and the computer-readable signal medium may send, propagate, or transmit the program used by the instruction executive system, apparatus or device or in combination with it. The program code contained on the computer-readable medium may be transmitted by using any suitable medium, including but not limited to: a wire, an optical cable, a radio frequency (RF) or the like, or any suitable combinations of the above.

The above-mentioned computer-readable medium may be included in the electronic device described above, or may exist alone without being assembled into the electronic device.

The above-mentioned computer-readable medium carries one or more programs which, when executed by the electronic device, cause the electronic device to perform the method in the above-mentioned embodiments.

The computer program code for executing the operation of the present disclosure may be written in one or more programming languages or combinations thereof, the above programming language includes but is not limited to object-oriented programming languages such as Java, Smalltalk, and C++, and further includes conventional procedural programming languages such as a "C" language or a similar programming language. The program code may be completely executed on the user's computer, partially executed on the user's computer, executed as a standalone software package, partially executed on the user's computer and partially executed on a remote computer, or completely executed on the remote computer or server. In the case involving the remote computer, the remote computer may be connected to the user's computer by any types of networks, including local area network (LAN) or wide area network (WAN), or may be connected to an external computer (such as connected by using an internet service provider through the Internet).

The flowcharts and the block diagrams in the drawings show possibly achieved system architectures, functions, and operations of systems, methods, and computer program products according to a plurality of embodiments of the present disclosure. At this point, each box in the flowchart or the block diagram may represent a module, a program segment, or a part of a code, the module, the program segment, or a part of the code contains one or more executable instructions for achieving the specified logical functions. It should also be noted that in some alternative implementations, the function indicated in the box may also occur in a different order from those indicated in the drawings. For example, two consecutively represented boxes may actually be executed basically in parallel, and sometimes it may also be executed in an opposite order, this depends on the function involved. It should also be noted that each box in the block diagram and/or the flowchart, as well as combinations of the boxes in the block diagram and/or the flowchart, may be achieved by using a dedicated hardware-based system that performs the specified function or operation, or may be achieved by using combinations of dedicated hardware and computer instructions.

The units described in the embodiments of the present disclosure may be implemented by means of software or by means of hardware. The name of the unit does not constitute a limitation for the unit itself in a case, for example, the first acquisition unit may also be described as "a unit for acquiring at least two Internet Protocol addresses".

The functions described above in this article may be at least partially executed by one or more hardware logic components. For example, non-limiting exemplary types of the hardware logic component that may be used include: a field programmable gate array (FPGA), an application specific integrated circuit (ASIC), an application specific standard part (ASSP), a system on chip (SOC), a complex programmable logic device (CPLD) and the like.

In the context of the present disclosure, the machine-readable medium may be a visible medium, and it may contain or store a program for use by or in combination with an instruction executive system, apparatus, or device. The machine-readable medium may be a machine-readable signal medium or a machine-readable storage medium. The machine-readable medium may include but not limited to an electronic, magnetic, optical, electromagnetic, infrared, or semiconductor system, apparatus, or device, or any suitable combinations of the above. More specific examples of the machine-readable storage medium may include an electric connector based on one or more wires, a portable computer disk, a hard disk drive, RAM, ROM, EPROM (or a flash memory), an optical fiber, CD-ROM, an optical storage device, a magnetic storage device, or any suitable combinations of the above.

In a first aspect, one or more embodiments of the present disclosure provide a method for prompting information based on lyrics, which includes:
in response to a playback request for a target song triggered by a user, determining a target lyric of the target song;
based on a specific lyric part of the target lyric, determining a lyric stop condition corresponding to the target lyric; and
in a process of playing the target song and the target lyric synchronously, in response to detecting that the target song reaches the lyric stop condition, outputting authority acquisition information.

According to one or more embodiments of the present disclosure, the in response to detecting that the target song reaches the lyric stop condition, outputting authority acquisition information includes:
in response to detecting that the target song reaches the lyric stop condition, stopping playing the target lyric; and
outputting the authority acquisition information.

According to one or more embodiments of the present disclosure, the outputting authority acquisition information includes:
displaying lyric viewing prompt information in association with an output region of the target lyric; and
detecting a triggering operation performed by the user for the lyric viewing prompt information, and displaying the authority acquisition information.

According to one or more embodiments of the present disclosure, the outputting authority acquisition information includes:
based on authority trial information and the authority acquisition information, determining a trial prompt pop-up window; and
outputting the trial prompt pop-up window to display the authority trial information and the authority acquisition information.

According to one or more embodiments of the present disclosure, after outputting the authority acquisition information, the method further includes:
detecting a click operation triggered by the user for the authority acquisition information, and generating an authority acquisition order; and
detecting an order processing operation performed by the user for the authority acquisition order, and displaying the specific lyric part of the target song.

According to one or more embodiments of the present disclosure, the method further includes:
acquiring a member identity type of the user, the member identity type including a non-member type, a member type or a trial member type; and
the outputting authority acquisition information including:
   in response to determining that the member identity type is the non-member type, outputting the authority acquisition information.

According to one or more embodiments of the present disclosure, the method further includes:
in response to determining that the member identity type is the trial member type, judging whether a trial time of the user reaches a corresponding trial duration;
if so, outputting trial end information and the authority acquisition information; and
if not, continuing to playback the specific lyric part of the target lyric.

According to one or more embodiments of the present disclosure, the outputting trial end information and the authority acquisition information includes:
determining an authority acquisition pop-up window based on the trial end information and the authority acquisition information; and
outputting the authority acquisition pop-up window.

According to one or more embodiments of the present disclosure, the in response to determining that the member identity type is the non-member type, outputting the authority acquisition information includes:
in response to determining that the member identity type is the non-member type and the user has ended a trial, determining an authority acquisition pop-up window based on the authority acquisition information in combination with member benefits information; and
outputting the authority acquisition pop-up window.

According to one or more embodiments of the present disclosure, the based on a specific lyric part of the target lyric, determining a lyric stop condition corresponding to the target lyric includes:
based on the specific lyric part of the target lyric, determining a first playback time corresponding to the specific lyric part; and
based on the first playback time, determining the lyric stop condition corresponding to the target lyric.

According to one or more embodiments of the present disclosure, the based on the first playback time, determining the lyric stop condition corresponding to the target lyric includes:
in response to determining that the first playback time is less than a first time threshold or greater than a second time threshold, determining that a playback time of the target song reaches a preset playback time as the lyric stop condition corresponding to the target lyric; and
in response to determining that the first playback time is greater than or equal to the first time threshold and less than or equal to the second time threshold, determining that the playback time of the target song reaches the first playback time as the lyric stop condition corresponding to the target lyric.

According to one or more embodiments of the present disclosure, the based on the specific lyric part of the target lyric, determining a first playback time corresponding to the specific lyric part includes:
determining at least one lyric sentence corresponding to the target lyric and each time label respectively associated with the at least one lyric sentence;
identifying a target lyric sentence corresponding to a specific lyric part from the at least one lyric sentence; and
based on a time label associated with the target lyric sentence, determining the first playback time corresponding to the specific lyric part.

According to one or more embodiments of the present disclosure, the determining at least one lyric sentence corresponding to the target lyric and each time label respectively associated with the at least one lyric sentence includes:
based on a lyric file of the target lyric, in combination with a lyric processing model, determining a lyric sentence list corresponding to the lyric file, wherein the lyric sentence list includes: the at least one lyric sentence and each sentence output information respectively associated with the at least one lyric sentence, the sentence output information including a time label of the lyric sentence; and
reading the at least one lyric sentence and each time label respectively associated with the at least one lyric sentence from the lyric sentence list.

According to one or more embodiments of the present disclosure, the specific lyric part is determined by:
based on a preset lyric playback ratio, determining the specific lyric part of the target lyric;
or, determining that a chorus lyric of the target lyric is the specific lyric part;
or, based on a preset song keyword, determining a serum lyric part of the target lyric to be the specific lyric part.

In a second aspect, one or more embodiments of the present disclosure provide an apparatus for prompting information based on lyrics, which includes:
a request response unit, configured to, in response to a playback request for a target song triggered by a user, determine a target lyric of the target song;
a time determination unit, configured to, based on a specific lyric part of the target lyric, determine a lyric stop condition corresponding to the target lyric; and
an information prompting unit, configured to, in a process of playing the target song and the target lyric synchronously, in response to detecting that the target song reaches the lyric stop condition, output authority acquisition information.

In a third aspect, one or more embodiments of the present disclosure provide an electronic device, which includes at least one processor and a memory, where
the memory stores computer-executable instructions; and
the at least one processor executes the computer-executable instructions stored in the memory, causing the at least one processor to perform the method for prompting information based on lyrics of the first aspect and various possible designs of the first aspect as described above.

In a fourth aspect, one or more embodiments of the present disclosure provide a computer-readable storage medium, which stores computer-executable instructions. The computer-executable instructions upon being executed by a processor, implement the method for prompting information based on lyrics of the first aspect and the various possible designs of the first aspect.

In a fifth aspect, an embodiment of the present disclosure provides a computer program product including computer programs that, when executed by a processor, implement the method for prompting information based on lyrics as described above in the first aspect and the various possible designs of the first aspect.

In a sixth aspect, an embodiment of the present disclosure provides a computer program for causing a computer to perform the method for prompting information based on lyrics as described above in the first aspect and the various possible designs of the first aspect.

In the method for prompting information provided by the present disclosure, the target lyric of the target song may be determined in response to the playback request of the target lyric triggered by the user. The specific lyric part of the target lyric can be used to determine the corresponding lyric stop condition, thus, in the process of playing the target song and the target lyric synchronously, the prompt information for authority maintenance can be outputted when it is detected that the target song reaches the lyric stop condition. The prompt information of authority maintenance can manage the user's authority more effectively and trigger the user to maintain the authority. The prompt efficiency of the lyric and the processing efficiency of authority maintenance can be improved by outputting the authority acquisition information in the lyric stop condition corresponding to the specific lyric part, the content prompt information of the lyric is effectively increased, and the lyric processing efficiency is improved.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, while operations have been described in a specific order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

Although the present subject matter has been described in a language specific to structural features and/or logical method acts, it will be appreciated that the subject matter defined in the appended claims is not necessarily limited to the specific features and acts described above. Rather, the specific features and acts described above are merely exemplary forms for implementing the claims.

## Claims

1. A method for prompting information based on lyrics, comprising:
in response to a playback request for a target song triggered by a user, determining a target lyric of the target song;
based on a specific lyric part of the target lyric, determining a lyric stop condition corresponding to the target lyric; and
in a process of playing the target song and the target lyric synchronously, in response to detecting that the target song reaches the lyric stop condition, outputting authority acquisition information.

2. The method according to claim 1, wherein the in response to detecting that the target song reaches the lyric stop condition, outputting authority acquisition information comprises:
in response to detecting that the target song reaches the lyric stop condition, stopping playing the specific lyric part of the target lyric; and
outputting the authority acquisition information.

3. The method according to claim 1 or 2, wherein the outputting authority acquisition information comprises:
displaying lyric viewing prompt information in association with an output region of the target lyric; and
detecting a triggering operation performed by the user for the lyric viewing prompt information, and displaying the authority acquisition information.

4. The method according to claim 1 or 2, wherein the outputting authority acquisition information comprises:
based on authority trial information and the authority acquisition information, determining a trial prompt pop-up window; and
outputting the trial prompt pop-up window to display the authority trial information and the authority acquisition information.

5. The method according to any one of claims 1-4, wherein after the outputting authority acquisition information, the method further comprises:
detecting a click operation triggered by the user for the authority acquisition information, and generating an authority acquisition order; and
detecting an order processing operation performed by the user for the authority acquisition order, and displaying the specific lyric part of the target song.

6. The method according to any one of claims 1-5, further comprising:
acquiring a member identity type of the user, the member identity type comprising a non-member type, a member type or a trial member type; and
the outputting authority acquisition information comprising:
in response to determining that the member identity type is the non-member type, outputting the authority acquisition information.

7. The method according to claim 6, further comprising:
in response to determining that the member identity type is the trial member type, judging whether a trial time of the user reaches a corresponding trial duration;
if so, outputting trial end information and the authority acquisition information; and
if not, continuing to playback the specific lyric part of the target lyric.

8. The method according to claim 7, wherein the outputting trial end information and the authority acquisition information comprises:
determining an authority acquisition pop-up window based on the trial end information and the authority acquisition information; and
outputting the authority acquisition pop-up window.

9. The method according to any one of claims 6-8, wherein the in response to determining that the member identity type is the non-member type, outputting the authority acquisition information comprises:
in response to determining that the member identity type is the non-member type and the user has ended a trial, determining an authority acquisition pop-up window based on the authority acquisition information in combination with member benefits information; and
outputting the authority acquisition pop-up window.

10. The method according to any one of claims 1-9, wherein the based on a specific lyric part of the target lyric, determining a lyric stop condition corresponding to the target lyric comprises:
based on the specific lyric part of the target lyric, determining a first playback time corresponding to the specific lyric part; and
based on the first playback time, determining the lyric stop condition corresponding to the target lyric.

11. The method according to claim 10, wherein the based on the first playback time, determining the lyric stop condition corresponding to the target lyric comprises:
in response to determining that the first playback time is less than a first time threshold or greater than a second time threshold, determining that a playback time of the target song reaches a preset playback time as the lyric stop condition corresponding to the target lyric; and
in response to determining that the first playback time is greater than or equal to the first time threshold and less than or equal to the second time threshold, determining that the playback time of the target song reaches the first playback time as the lyric stop condition corresponding to the target lyric.

12. The method according to claim 10 or 11, wherein the based on the specific lyric part of the target lyric, determining a first playback time corresponding to the specific lyric part comprises:
determining at least one lyric sentence corresponding to the target lyric and each time label respectively associated with the at least one lyric sentence;
identifying a target lyric sentence corresponding to a specific lyric part from the at least one lyric sentence; and
based on a time label associated with the target lyric sentence, determining the first playback time corresponding to the specific lyric part.

13. The method according to claim 12, wherein the determining at least one lyric sentence corresponding to the target lyric and each time label respectively associated with the at least one lyric sentence comprises:
based on a lyric file of the target lyric, in combination with a lyric processing model, determining a lyric sentence list corresponding to the lyric file, wherein the lyric sentence list comprises: the at least one lyric sentence and each sentence output information respectively associated with the at least one lyric sentence, the sentence output information comprising a time label of the lyric sentence; and
reading the at least one lyric sentence and each time label respectively associated with the at least one lyric sentence from the lyric sentence list.

14. The method according to any one of claims 1-13, wherein the specific lyric part is determined by:
based on a preset lyric playback ratio, determining the specific lyric part of the target lyric;
or, determining that a chorus lyric of the target lyric is the specific lyric part;
or, based on a preset song keyword, determining a serum lyric part of the target lyric to be the specific lyric part.

15. An apparatus for prompting information based on lyrics, comprising:
a request response unit, configured to, in response to a playback request for a target song triggered by a user, determine a target lyric of the target song;
a time determination unit, configured to, based on a specific lyric part of the target lyric, determine a lyric stop condition corresponding to the target lyric; and
an information prompting unit, configured to, in a process of playing the target song and the target lyric synchronously, in response to detecting that the target song reaches the lyric stop condition, output authority acquisition information.

16. An electronic device, comprising: a processor, a memory, an input apparatus, and an output apparatus,
wherein the memory stores computer-executable instructions, the input apparatus is configured to detect a playback request for a target song triggered by a user, the output apparatus is configured to synchronously play the target song and a target lyric and output authority acquisition information, and
the processor executes the computer-executable instructions stored in the memory, causing the processor to be configured with the method for prompting information based on lyrics according to any one of claims 1-14.

17. A computer-readable storage medium, storing computer-executable instructions, wherein the computer-executable instructions upon being executed by a processor, implement the method for prompting information based on lyrics according to any one of claims 1-14.

18. A computer program product, comprising computer programs, wherein the computer programs are executed by a processor to be configured with the method for prompting information based on lyrics according to any one of claims 1-14.

19. A computer program, wherein the computer program causes a computer to execute the method for prompting information based on lyrics according to any one of claims 1-14.
